# EUROPEAN PATENT SPECIFICATION

(11) **EP 3 483 299 B1**
(45) Date of publication and mention of the grant of the patent: **10.06.2026**
(21) Application number: 16907994.4
(22) Date of filing: 08.09.2016
(51) Int. Cl.: C22C 38/24, C22C 38/46, C22C 38/00, C21D 8/04, C21D 8/00, C21D 8/02, C22C 38/04, C23C 2/06, C23C 2/12, C22C 38/12

(54) **HOT STAMPING PROCESS AND HOT-STAMPED COMPONENT**
HEISSPRÄGUNGSVERFAHREN UND HEISSGEPRÄGTE KOMPONENTE
ROCÉDÉ DE FORMAGE PAR ESTAMPAGE À CHAUD ET ÉLÉMENT FORMÉ PAR ESTAMPAGE À CHAUD

(30) Priority: 08.07.2016 CN 201610535069
(43) Date of publication of application: 15.05.2019
(73) Proprietor: Easyforming Technology Co., Ltd., Suzhou, Jiangsu , 215000 (CN); Bengang Steel Plates Co., Ltd., Benxi, Liaoning 117000 (CN)
(72) Inventor: YI, Hongliang, Shenyang Liaoning 110819 (CN); LIU, Hongliang, Benxi Liaoning 117000 (CN); CHANG, Zhiyuan, Shenyang Liaoning 110819 (CN); WU, Di, Shenyang Liaoning 110819 (CN); HUANG, Jian, Benxi Liaoning 117000 (CN); WANG, Guodong, Shenyang Liaoning 110819 (CN)
(74) Representative: Rüger Abel Patentanwälte PartGmbB
(86) International application number: PCT/CN2016/098411
(87) International publication number: WO 2018/006490

(56) References cited:
- EP-A1- 2 546 375
- EP-A1- 2 562 271
- EP-A1- 3 020 845
- EP-A1- 3 040 133
- EP-A2- 2 660 345
- WO-A2-02/103073
- WO-A2-2009/145563
- CA-A1- 2 934 597
- CA-A1- 2 943 652
- CN-A- 102 605 261
- CN-A- 103 993 223
- CN-A- 104 846 274
- CN-A- 104 846 274
- CN-A- 105 074 038
- US-A1- 2009 242 086

## Description

### TECHNICAL FIELD

The present invention relates to a hot stamping process and a hot stamped component.

### BACKGROUND

With the urgent need for global energy conservation and emission reduction and an environmentally friendly economy, the automotive industry is developing in the direction of light weight, but the light weight of an automobile is not at the expense of safety. On the contrary, the collision safety requirements for automobiles are getting higher and higher. At present, high-strength and ultra-high-strength steel materials for vehicles are attracting more and more attention in the automotive industry due to their high strength and light weight. For a high strength, a cold stamping method is adopted, such that the formed properties are reduced, large stamping force is required, and cracking easily occurs. In addition, after being formed, the part rebounds greatly, so that its shape and dimensional accuracy can hardly be guaranteed.

The hot stamping technology arising in Europe is a new forming technology that solves the above problems. The technology is a forming technology that heats the blank to a completely austenitized state, rapidly transfers it to a die having a uniform cooling system to be rapidly stamp formed, and meanwhile performs cooling quenching treatment to obtain a super-high-strength steel part with a uniform martensite structure. At high temperatures, the material has good stamping formability, can be stamp formed into complex members, and at the same time eliminates the rebound impact, such that the part has high precision and good quality. At the present time, major automobile manufacturers in Europe and the United States have successfully applied the high-strength steel material hot stamping technology to the production of members such as an A-pillar, a B-pillar, a bumper, a roof frame, an underbody frame and a door anti-collision bar of an automobile. Due to a high strength and the presence of a martensite structure, the performance of the steel for hot stamping in automotive crash safety depends on its toughness, cold bending property and resistance to delayed cracking. Currently, the steel for hot stamping widely used in the automotive industry is structural alloy steel represented by 22MnB5, which has such problems as high austenitizing temperature (AC3 of about 850 °C), low hardenability, poor toughness after forming, limited cold bending performance, and delayed cracking.

CN100370054C discloses a high-strength steel material for hot stamping coated with an aluminum alloy. The patent document requires a strength of more than 1000 MPa, wherein the strength is 1800 MPa when the carbon content is 0.35%, and the strength reaches 1900 to 2100 MPa or more when the carbon content is above 0.5, but the document does not mention the elongation and toughness thereof. In fact, the material with an alloy design requires tempering heat treatment to achieve the strength value, and has poor toughness, which cannot meet the elongation and toughness requirement of above 1800 MPa of hot stamp formed steel and members, and the high carbon content is detrimental to the welding performance.

CN101583486A discloses a method of preparing a coated strip and a hot stamped product thereof. A preferred embodiment of this document mentions that heat treatment is required after the hot stamping so that its mechanical properties can reach a yield strength of 1200 MPa and a tensile strength of above 1500 MPa, but it does not quantitatively expound the ductility. It only proposes to control the sulfur content (requiring a sulfur content of less than 0.002wt%) to ensure the ductility and avoid crack propagation caused by sulfide inclusions, but it is difficult and costly in the industry to control the sulfur content below 20 ppm. Hence, by controlling the sulfur element content, the problem of low ductility cannot be completely solved.
EP 2 660 345 A2 discloses a steel sheet for a formed member having enhanced ductility and a method for manufacturing the formed member. The material of the steel sheet includes C, Mn, V, Si+Al, Cr, Ti, Nb, B components in various ranges. A formed member is manufactured using a steel sheet by performing a hot forming process on the steel sheet and then quenching the hot-formed steel sheet to a temperature lower than Mf and subsequently heating the quenched steel sheet to a predetermined temperature range and maintaining the steel sheet within this temperature range.

### SUMMARY

Therefore, in view of the problems in the prior art, one of the objects of the present invention is to improve the deficiencies of the conventional steel material for hot stamping, hot stamping process and
formed member having high toughness and delayed crack resistance after the hot stamping without the need of heat treatment such as tempering.

According to an embodiment of the present invention, there is provided a steel material for hot stamping comprising the following components by weight: 0.27 to 0.40% of C; 0.2 to 3.0% of Mn; 0.11 to 0.4% of V; 0 to 0.8 % of Si; 0 to 0.5% of Al; 0 to 2% of Cr; 0 to 0.15% of Ti; 0 to 0.15% of Nb; 0 to 0.004% B; a total of less than 2% of Mo, Ni, Cu and other alloying elements that are beneficial to improving the hardenability, other impurity elements, balance Fe.

The steel material for hot stamping of the present invention has a heating temperature range of 800 to 920 °C during the hot stamping process, and preferably has a composite carbide of VC and/or V with Ti, Nb at the austenite grain boundary during the austenitizing process. In the austenitizing heating process of the steel material for hot stamping of the present invention, the precipitated particle size of the composite carbide of VC and/or V with Ti, Nb at the austenite grain boundary is preferably from 1 to 80 nm. In the hot stamping process, the steel material for hot stamping of the present invention precipitates a certain amount of composite carbide of VC and/or V with Ti, Nb in the austenite crystal including grain boundaries during the cooling after the austenitizing, and a carbide particle size in the austenite crystal is 0.1 to 20 nm. The volume fraction of the composite carbide of VC and/or V with Ti, Nb in the steel material for hot stamping of the present invention is more than 0.1%.

The hot stamped steel material of the present invention achieves a yield strength of 1300 MPa to 1700 MPa, a tensile strength of 1800 to 2200 MPa, and an elongation of 6 to 9% without tempering; and achieves a yield strength of 1350 to 1800 MPa, a tensile strength of 1700 to 2150 MPa, and an elongation of 7 to 10% after tempering heat treatment.

The hot stamped steel material of the present invention includes a hot-rolled steel sheet, a hot-rolled pickled steel sheet, a cold-rolled steel sheet, or a steel sheet with a coating layer. The steel sheet with a coating layer is a zinc-coated steel sheet which is a hot-rolled steel sheet or a cold-rolled steel sheet on which a metal zinc layer is formed, wherein the zinc-coated steel sheet includes at least one selected from hot dip galvanizing, galvanizing annealing, zinc plating, or zinc-iron plating. The steel sheet with a coating layer is a hot-rolled steel sheet or a cold-rolled steel sheet on which an aluminum-silicon layer is formed, or a steel sheet with an organic coating layer.

In accordance with another embodiment of the present invention, a hot stamping process is provided that includes the following procedures:
(a) steel material austenitizing: providing a steel material for hot stamping having the above-described alloy composition or a preformed member thereof, heating it to 800 to 920 °C and maintaining the temperature for 1 to 10000 s, wherein the heating method in the procedure can be, but not limited to, for example, a roller hearth furnace, a chamber furnace, induction heating, resistance heating;
(b) steel material transferring: transferring the above heated steel material to a hot stamping die while ensuring that the steel material has a temperature of above 550 °C when being transferred to the die;
(c) hot stamping: setting a reasonable press tonnage according to the above-mentioned steel blank size, the stamping pressure being 1 to 40 MPa, determining a dwell time according to a thickness of the plate, which is usually controlled at 4 to 40 s to ensure that a temperature of the member is below 250 °C when the die is opened, for example, a 1.2 mm thick blank has a dwell time of 5 ~ 15 s, and a 1.8 mm thick blank has a dwell time of 7 ~ 20 s, and controlling a die surface temperature below 200 °C through a cooling system of the die, so that the steel material in the die is rapidly cooled to below 250 °C at an average cooling rate of not less than 10 °C/s.

According to still another embodiment of the present invention, there is also provided a tempering process comprising the steps of:
(a) obtaining a formed member by the above-described hot stamping process of the present invention;
(b) during the coating process, heating the formed member to 150 to 200 °C and maintaining the temperature for 10 to 40 minutes; or heating the formed member to 150 to 280 °C at a heating rate of 0.001 to 100 °C/s and maintaining the temperature for 0.5 to 120 min, and then cooling it in any way.

The hot stamped component formed by the hot stamping process of the present invention can be used for automotive high-strength members including, but not limited to, an A-pillar, a B-pillar, a bumper, a roof frame, an underbody frame, and a door bumper bar of an automobile.

After hot stamping or equivalent heat treatment, the steel material of the present invention achieves a yield strength of 1300 MPa to 1700 MPa, a tensile strength of 1800 to 2200 MPa, and an elongation of 6 to 9% after direct hot stamping quenching (without tempering). After the tempering treatment of the present invention, 1500 MPa - 1900 MPa - 8%, and preferably 1600 MPa - 2100 MPa - 7% can be reached. This property cannot be achieved by direct quenching (no tempering) of the composition in the prior art.

### BRIEF DESCRIPTION OF THE DRAWINGS

FIG. 1 shows a prior austenite grain boundary morphology of the steel material of the present invention after hot stamping;
FIG. 2 shows a precipitated particle morphology and size of the steel material of the present invention after hot stamping;
FIG. 3 shows a hot stamping process diagram of a preferred embodiment of the present invention.

### DETAILED DESCRIPTION

The present invention will be described in more detail below with reference to exemplary embodiments. The following embodiments or experimental data are intended to illustrate the invention exemplarily, and those skilled in the art should be aware that the present invention is not limited to these embodiments or experimental data.

The steel material for hot stamping comprising the following components by weight: 0.27 to 0.40% of C; 0.2 to 3.0% of Mn; 0.11 to 0.4% of V; 0 to 0.8 % of Si; 0 to 0.5% of Al; 0 to 2% of Cr; 0 to 0.15% of Ti; 0 to 0.15% of Nb; 0 to 0.004% of B; the content of Mo, Ni, Ca in combination amounts a total of less than 2 %, inevitable impurities, and balance Fe.

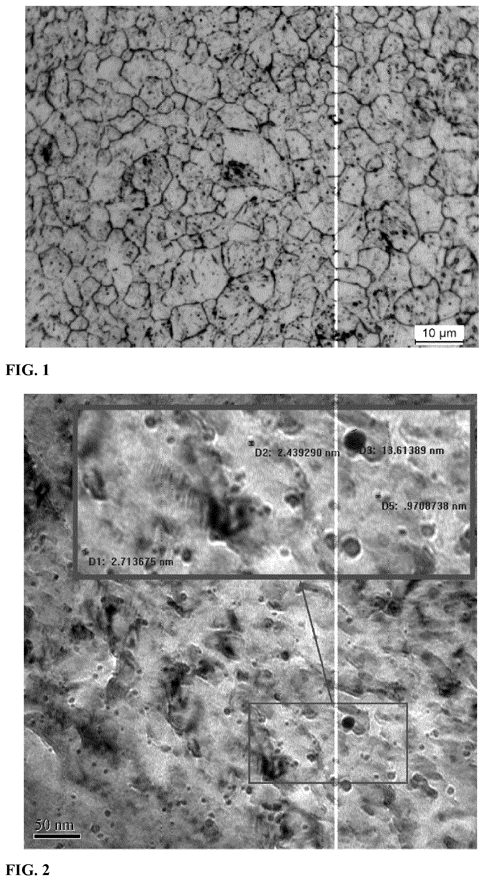

The martensite strength improves with increasing carbon content, but high carbon content leads to the formation of twinned martensite, which reduces the toughness of the material. The twinned martensite must be tempered to prevent brittle fracture. The steel material of the present invention adds a specific composition of V element to the alloy composition, so that the full austenitizing heating temperature range during the hot stamping process is 800 to 920 °C; since over 0.11% of V and over 0.27% of C are added to the material, according to the condition of the solubility product of VC precipitation, there will be a certain amount of composite carbide of VC and/or (V, Ti, Nb) C at the austenite grain boundary during the austenitizing process, and the second phase particles effectively pin the austenite grains, which will refine the prior austenite grains. Therefore, the precipitation of VC has an important influence on controlling the size of the prior austenite grains. According to a preferred embodiment of the present invention, the prior austenite grain size is 3 to 6 µm, and the grain refinement and strengthening can not only improve the yield strength but also increase the toughness. FIG. 1 shows a prior austenite grain boundary morphology of the steel material of the present invention after the hot stamping.

If the achievement of a tensile strength of above 1800 MPa only relies on a high carbon addition, the martensite formed contains twinned martensite, such that it has poor toughness and can have ductile fracture only after tempering treatment. After tempering at 170 °C for 20 minutes (usually 170 ~ 200 °C, 10 ~ 30 minutes for automotive coating), the yield strength of the material is increased by 50 ~ 100MPa, the tensile strength is reduced by about 50MPa, and the elongation can be increased to more than 5%. In the prior art (for example, the material composition and properties publicized by Nippon Steel Corporation): Fe-0.31C-1.3Mn-Ti-B% has an elongation of about 3.5% upon the brittle fracture under the strength of 1700 MPa in the hot stamping state (quenching), and has a strength of 1785 MPa and an elongation of 7% after tempering at 170 °C for 20 minutes. Poor toughness before the tempering increases the risk of delayed cracking of the member; moreover, the automotive member is welded before entering the coating procedure, such that the poor toughness of the member in the hot stamped state (not tempered) tends to cause cracking in the welding assembly process.

According to the present invention, over 0.11% of V and over 0.27% of C are added to the steel material alloy composition, and VC or (V, Ti, Nb) C with a volume fraction of above 0.1% will be further precipitated during the cooling process of 3 to 30 s after the austenitizing treatment and before the rapid cooling of the hot stamping die, wherein the uniform fine second phase particles can increase the tensile strength by over 100 MPa, and preferably the precipitated particle size is 1~20 nm, the average particle size is 4.5 nm, the volume fraction is about 0.22% (0.22% is calculated from the amount of precipitation in the carbon replica sample by conversion from two-dimension to three-dimension, and the calculated volume fraction of Thermal-Cac is 0.28%), wherein the frequency of occurrence of 1~10 nm is as high as 94.4%, and according to the precipitation strengthening mechanism, the precipitation strengthening enhancement thereof can reach 240 MPa. The precipitation of the VC or (V, Ti) C will consume the carbon in the austenite and reduce its carbon content, thereby decreasing the fraction of twinned martensite formed in the martensite after phase transformation, and therefore, based on the VC precipitation of the present invention, the toughness of the martensite itself can be improved, the strength of the martensite is lowered due to a decrease of the carbon content therein, but the strength of the material is enhanced by VC precipitation strengthening and fine grain strengthening of the prior austenite grains. FIG. 2 shows a precipitated particle morphology and size of the steel material of the present invention after hot stamping.

In addition, VC and H have high binding energy, are an irreversible hydrogen trap and can easily fix hydrogen atoms around them, which can improve the hydrogen-induced delayed cracking ability of the material (Reference: Harshad Kumar Dharamshi Hansraj BHADESHIA. "Prevention of Hydrogen Embrittlement in Steels". ISIJ International, Vol. 56 (2016), No. 1, pp. 24-36).

After hot stamping, the steel material of the present invention achieves a tensile strength of 1800 to 2200 MPa, a yield strength of 1300 MPa to 1700 MPa, and an elongation of 9 to 6% after direct hot stamping quenching and without tempering. Preferably, it reaches 1400 MPa-1900 MPa-8%, 1450 MPa-2100 MPa-7%, and the property cannot be achieved by the alloy composition of the prior art upon direct quenching (no tempering); even if the coating process can realize the function of tempering treatment, in order to meet the welding requirement that brittle fracture of the part does not occur in the welding process, tempering heat treatment must be conducted after the hot stamping. In contrast, a major advantage of the present invention is that the process step of tempering heat treatment is eliminated, thereby simplifying the forming process.

The specific manufacturing process of the steel material for hot stamping of the present invention is disclosed in the appended claims.

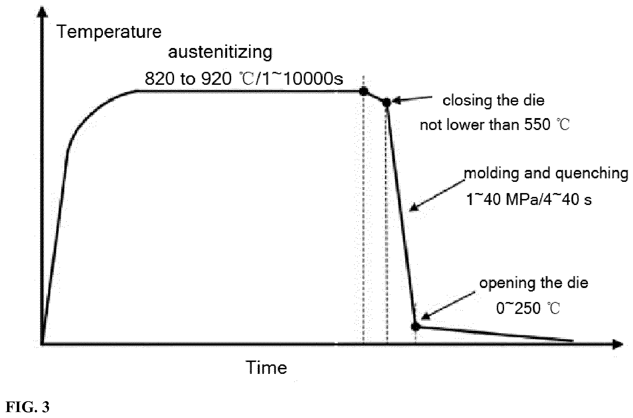

FIG. 3 shows a hot stamping process diagram of a preferred embodiment of the present invention. According to the present invention, the hot stamping process of the invention can include the following procedures:
(a) steel material austenitizing: providing any kind of steel material for hot stamping or preformed member thereof according to a first aspect of the invention, heating it to 800 to 920 °C and maintaining the temperature for 1 to 10000 s;
(b) steel material transferring: for example, the heated steel material is usually transferred to a hot stamping die using, but not limited to, a manipulator or a robot to ensure that the steel material has a temperature of above 550 °C when transferred to the die;
(c) hot stamping: setting a reasonable press tonnage according to the above-mentioned steel blank size, the stamping pressure being 1 to 40 MPa, determining a dwell time according to a thickness of the plate, which is controlled at 4 to 40 s to ensure that a temperature of the member is below 250 °C when the die is opened, for example, a 1.2 mm thick blank has a dwell time of 5 ~ 15 s, and a 1.8 mm thick blank has a dwell time of 7 ~ 20 s, and controlling a die surface temperature below 200 °C through a qunching cooling system of the die, so that the steel material in the die is rapidly cooled to below 250 °C at an average cooling rate of not less than 10 °C/s.

The following are experimental data of the steel material. It should be apparent to those skilled in the art that these data are merely exemplary.

**Table 1 Exemplary components of a steel material (UFT-PHS1800). It should be noted that these Examples are not inventive Examples, since the final cooling rate was not recorded.**

| Steel No. | Chemical components (% by weight) | | | | |
|---|---|---|---|---|---|
| | C | Mn | Si | V | Ti/Nb/Mo |
| IS1 | 0.31 | 1.52 | 0.21 | 0.11 | |
| IS2 | 0.29 | 1.62 | 0.22 | 0.16 | 0.02Ti |
| IS3 | 0.30 | 1.65 | 0.19 | 0.16 | |
| IS4 | 0.31 | 1.09 | 0.17 | 0.18 | 0.2Mo |
| IS5 | 0.32 | 1.65 | 0.21 | 0.18 | |
| IS6 | 0.33 | 1.62 | 0.20 | 0.25 | |
| IS7 | 0.36 | 1.45 | 0.16 | 0.39 | 0.03Nb |
| CS1 (comparative steel material) | 0.31 | 1.65 | 0.2 | | |

**Table 2 Parameters of the hot stamping process (1.5mm thick plate)**

| Steel No. | Sample No. | Austenitizing temperature and holding time | Press tonnage and die temperature | Sample temperature upon die closing/°C | Dwell time/s | Sample temperature upon die opening/°C | 170 °C /20 minutes or not |
|---|---|---|---|---|---|---|---|
| IS1 | ISP1 | 850 °C /5 minutes | 200 tons/60 °C | 687 | 10S | 87 | No |
| | ISP2 | 900 °C /5 minutes | 200 tons/60 °C | 703 | 10S | 95 | No |
| IS2 | ISP3 | 850 °C /5 minutes | 200 tons/60 °C | 708 | 10S | 96 | No |
| | ISP4 | 900 °C /5 minutes | 200 tons/60 °C | 688 | 10S | 111 | No |
| IS3 | ISP5 | 850 °C /5 minutes | 200 tons/60 °C | 697 | 10S | 122 | No |
| | ISP6 | 900 °C /5 minutes | 200 tons/60 °C | 714 | 10S | 122 | No |

| | | | | | | | |
|---|---|---|---|---|---|---|---|
| [The last column showing the tempering process (heating, holding the temperature)] | | | | | | | |

| | | | | | | | |
|---|---|---|---|---|---|---|---|
| | ISP12 | 900 °C /5 minutes | 200 tons/60 °C | 721 | 10S | 136 | No |
| IS6 | ISP13 | 850 °C /5 minutes | 200 tons/60 °C | 659 | 10S | 121 | No |
| | ISP14 | 900 °C /5 minutes | 200 tons/60 °C | 683 | 10S | 143 | No |
| IS7 | ISP15 | 850 °C /5 minutes | 200 tons/60 °C | 688 | 10S | 91 | No |
| | ISP16 | 900 °C /5 minutes | 200 tons/60 °C | 695 | 10S | 103 | No |
| CS1 | CSP1 | 850 °C /5 minutes | 200 tons/60 °C | 677 | 10S | 125 | No |
| | CSP2 | 900 °C /5 minutes | 200 tons/60 °C | 650 | 10S | 114 | No |
| | CSP3 | 850 °C /5 minutes | 200 tons/60 °C | 677 | 10S | 125 | Yes |
| | CSP4 | 900 °C /5 minutes | 200 tons/60 °C | 650 | 10S | 114 | Yes |

**Table 3 Mechanical property results (tensile testes: 1.5 mm thick plate, JIS5 samples; Stacked Charpy V-notched impact tests: 3*1.5mm stacked samples, TD means transverse direction, RD means rolling direction)**

| Steel No. | Sample No. | UTS/MPa | YS / MPa | TEL / % | α ₖ / J cm⁻² (TD/RD) |
|---|---|---|---|---|---|
| IS1 | ISP1 | 1870±20 | 1262±37 | 7.0±0.89 | 48/54 |
| | ISP2 | 1822±9 | 1204±1 | 7.4±0.14 | 56/60 |
| IS2 | ISP3 | 1891±4 | 1338±33 | 7.9±0.2 | 44/55 |
| | ISP4 | 1919±9 | 1315±9 | 7.1±0.29 | 52/61 |
| IS3 | ISP5 | 1924±1 | 1360 | 7.1±0.3 | 45/56 |
| | ISP6 | 1873±10 | 1341 | 7.2±0.16 | 54/63 |
| | ISP7 | 1870±23 | 1431 | 7. 5±0.24 | 45.5/58.9 |
| | ISP8 | 1818±1 | 1425 | 7.3±0.09 | 53.7/73.9 |
| IS4 | ISP9 | 1689±11 | 1125:1:5 | 8.2±0.54 | 56/62 |
| | ISP10 | 1678±8 | 1178±15 | 8.3±0.21 | 58/67 |
| IS5 | ISP11 | 1944±32 | 1258±8 | 7.2±0.38 | 57.9/62.9 |
| | ISP12 | 1990±8 | 1364±12 | 7±0.31 | 51/63.5 |
| IS6 | ISP13 | 1989±2 | 1360±66 | 7.7±0.59 | 49.7/51.5 |
| | ISP14 | 2020±2 | 1336±1 | 8±0.1 | 52.1/62.3 |
| ISP7 | ISP15 | 2202±15 | 1508±32 | 6.9±0.42 | 47/55 |
| | ISP16 | 2185±26 | 1486±45 | 7.0±0.34 | 48.5/57 |
| CS1 | CSP1 | 1857±39 | 1359 | 5.9±0.11 | 50/41 |
| | CSP2 | 1798±23 | 1238 | 5.2±0.04 | 41.5/52.5 |
| | CSP3 | 1796±1 | 1369 | 6. 92±0. 66 | 42/51 |
| | CSP4 | 1702±20 | 1374 | 6.3±0.16 | 43/53 |
| 22MnB5(Al-Si) | No tempering | 1565±29 | 1132±27 | 7.5±0.49 | 51.1/59.6 |

**Table 4 Mechanical property results of various portions of a U-shaped test piece of 30MnBV steel after hot stamping (1.5 mm thick plate, no tempering treatment, hot stamped state)**

| Position | Heating temperature (°C) | Thermal insulation time (minutes) | Die temperature (°C) | Dwell time (s) | Tensile strength (MPa) | Yield strength (MPa) | Elongation (%) |
|---|---|---|---|---|---|---|---|
| Flange | 850 | 5 | 80 | 12 | 1836±3 | 1233 | 7.8±0.8 |
| Wall portion | 850 | 5 | 80 | 12 | 1801±1 | 1213 | 8.0±0.2 |
| Bottom portion | 850 | 5 | 80 | 12 | 1869±12 | 1243 | 6.9±0.6 |

**Table 5 Mechanical property results of various portions of a test piece of a part (door anti-collision beam) after hot stamping (1.5 mm thick plate, the tempering process being a simulated baking process, heating at 170 °C and holding the temperature for 20 minutes)**

| Position | Heating temperature (°C) | Thermal insulation time (minutes) | Die temperature (°C) | Dwell time (s) | Tempered | Tensile strength (MPa) | Yield strength (MPa) | Elongation (%) |
|---|---|---|---|---|---|---|---|---|
| Bottom portion | 850 | 5 | 80 | 10 | Not tempered | 2030±10 | 1424±21 | 6.1±0.1(A50) |
| | | | | | Tempered | 1922±4 | 1514±19 | 7.2±0.02(A50) |
| Bottom portion | 875 | 5 | 80 | 10 | Not tempered | 2010±8 | 1414±16 | 6.9±0.1(A50) |
| | | | | | Tempered | 1921±7 | 1510±29 | 8.3±0.1(JIS5) |

## Claims

1. A hot stamped steel material, **characterized in that**, the hot stamped steel material comprises the following components by weight:
0.27 to 0.40% of C;
0.2 to 3.0% of Mn;
0.11 to 0.4% of V;
0 to 0.8% of Si;
0 to 0.5% of Al;
0 to 2% of Cr;
0 to 0.15% of Ti;
0 to 0.15 of Nb;
0 to 0.004% of B;
the content of Mo, Ni, Cu in combination amounts a total of less than 2%; and
inevitable impurity elements,
wherein the balance consists of Fe,
the hot stamped steel material having a yield strength of 1300 MPa to 1700 MPa, a tensile strength of 1800 to 2200 MPa, and an elongation of 6 to 9% without tempering.

2. The hot stamped steel material according to claim 1, **characterized in that**, the hot stamped steel material has a composited carbide of VC and/or (V, Ti)C, (V, Nb)C, or (V, Nb, Ti)C at an austenite grain boundary during an austenitizing process at a temperature range of 800 to 920 °C during a hot stamping process.

3. The hot stamped steel material according to any one of claims 1-2, **characterized in that**, a volume fraction of the carbide of VC and/or composited carbide of V with Ti, Nb in the hot stamped steel material is more than 0.1%.

4. A tempered hot stamped steel material comprising the hot stamped steel material according to any one of claims 1-3, **characterized in that**, the tempered hot stamped steel material has a yield strength of 1350 to 1800 MPa, a tensile strength of 1700 to 2150 MPa, and an elongation of 7 to 10%.

5. The hot stamped steel material according to any one of claims 1-2, **characterized in that** the hot stamped steel material is made from a steel sheet that includes a hot-rolled steel sheet, a hot-rolled pickled steel sheet, a cold-rolled steel sheet, or a steel sheet with a coating layer.

6. The hot stamped steel material according to claim 5, **characterized in that**, the steel sheet with a coating layer is a zinc-coated steel sheet which is a hot-rolled steel sheet or a cold-rolled steel sheet on which a metal zinc layer is formed, wherein the zinc-coated steel sheet includes at least one selected from hot-dip galvanizing, galvanizing annealing, zinc plating, or zinc-iron plating.

7. The hot stamped steel material according to claim 5, **characterized in that**, the steel sheet with a coating layer is a hot-rolled steel sheet or a cold-rolled steel sheet on which an aluminum-silicon layer is formed, or a steel sheet with an organic coating layer.

8. A hot stamping process, **characterized by** comprising the following procedures:
(a) steel material austenitizing: providing a steel material comprising 0.27 to 0.40% by weight of C; 0.2 to 3.0% by weight of Mn; 0.11 to 0.4% by weight of V; 0 to 0.8% by weight of Si; 0 to 0.5% by weight of Al; 0 to 2% by weight of Cr; 0 to 0.15% by weight of Ti; 0 to 0.15 of Nb; 0 to 0.004% by weight of B; the content of Mo, Ni, Cu in combination amounts a total of less than 2% by weight; and inevitable impurity elements, wherein the balance consists of Fe,
heating it to 800 to 920 °C and maintaining the temperature for 1 to 10000 s;
(b) steel material transferring: transferring the above heated steel material to a die for hot stamping while ensuring that the steel material has a temperature of above 550 °C when being transferred to the die;
(c) hot stamping: setting a reasonable press tonnage according to the steel blank size of the above-mentioned material to achieve a stamping pressure being 1 to 40 MPa, determining a dwell time according to a thickness of the sheet, which is controlled at 4 to 40 s, and controlling a die surface temperature below 200 °C through a cooling system of the die, so that the steel material in the die is rapidly cooled to below 250 °C at an average cooling rate of not less than 10 °C/s.

9. The hot stamping process according to claim 8, **characterized in that**, a heating method in the procedure (a) comprises at least one of a roller hearth furnace, a chamber furnace, induction heating, and resistance heating.

10. A tempering process, **characterized by** comprising the steps of:
(a) providing hot stamped steel material according to claim 1;
(b) heating the hot stamped steel material to 150 to 200 °C and maintaining the temperature for 10 to 40 minutes by the baking process during car body assembly; or heating the formed component to 150 to 280 °C at a heating rate of 0.001 to 100 °C/s and maintaining the temperature for 0.5 to 120 minutes, and then cooling it in any way.

11. Use of a component made of hot stamped steel material according to any of claims 1 to 3 or made of a tempered hot stamped material according to claim 4 for automotive high-strength members including an A-pillar, a B-pillar, a bumper, a roof frame, an underbody frame, and a door bumper bar of an automobile.

## Patentansprüche

1. Warmgeprägtes Stahlmaterial, **dadurch gekennzeichnet, dass** das warmgeprägte Stahlmaterial die folgenden Bestandteile in Gew.-% umfasst:
0,27 bis 0,40% C;
0,2 bis 3,0% Mn;
0,11 bis 0,4% V;
0 bis 0,8% Si;
0 bis 0,5% Al;
0 bis 2% Cr;
0 bis 0,15% Ti;
0 bis 0,15% Nb;
0 bis 0,004% B;
Mo, Ni und Cu in einem Gesamtanteil von weniger als 2%; und
unvermeidbare Verunreinigungen;
wobei der Rest aus Fe besteht,
wobei das warmgeprägte Stahlmaterial eine Streckgrenze von 1300 MPa bis 1700 MPa, eine Zugfestigkeit von 1800 bis 2200 MPa und eine Dehnung von 6% bis 9% ohne Anlassen aufweist.

2. Warmgeprägtes Stahlmaterial nach Anspruch 1, **dadurch gekennzeichnet, dass** das warmgeprägte Stahlmaterial ein Verbundkarbid aus VC und/oder (V, Ti) C, (V, Nb) C oder (V, Nb, Ti) C an einer Austenitkorngrenze während eines Austenitisierungsprozesses in einem Temperaturbereich von 800 bis 920°C während eines Wärmeprägprozesses aufweist.

3. Warmgeprägtes Stahlmaterial nach einem der Ansprüche 1 bis 2, **dadurch gekennzeichnet, dass** der Volumenanteil des Karbids von VC und/oder des Verbundkarbids von V mit Ti, Nb in dem warmgeprägten Stahlmaterial mehr als 0,1% beträgt.

4. Angelassenes, warmgeprägtes Stahlmaterial, das das warmgeprägte Stahlmaterial nach einem der Ansprüche 1 bis 3 umfasst, **dadurch gekennzeichnet, dass** das angelassene, warmgeprägte Stahlmaterial eine Streckgrenze von 1350 bis 1800 MPa, eine Zugfestigkeit von 1700 bis 2150 MPa und eine Dehnung von 7 bis 10% aufweist.

5. Warmgeprägtes Stahlmaterial nach einem der Ansprüche 1 bis 2, **dadurch gekennzeichnet, dass** das warmgeprägte Stahlmaterial aus einem Stahlblech hergestellt ist, dass ein warmgewalztes Stahlblech, ein warmgewalztes, gebeiztes Stahlblech, ein kaltgewalztes Stahlblech oder ein Stahlblech mit einer Überzugsschicht umfasst.

6. Warmgeprägtes Stahlmaterial nach Anspruch 5, **dadurch gekennzeichnet, dass** das Stahlblech mit einer Überzugsschicht ein verzinktes Stahlblech ist, dass ein warmgewalztes Stahlblech oder ein kaltgewalztes Stahlblech ist, auf dem eine metallische Zinkschicht ausgebildet ist, wobei das verzinkte Stahlblech mindestens eines der aus folgendem umfasst: Feuerverzinkung, galvanisches Glühen, Verzinkung oder Zinkeisenbeschichtung.

7. Warmgeprägtes Stahlmaterial nach Anspruch 5, **dadurch gekennzeichnet, dass** das Stahlblech mit einer Überzugsschicht ein warmgewalztes Stahlblech oder ein kaltgewalztes Stahlblech ist, auf dem eine Aluminium-Silizium-Schicht ausgebildet ist oder ein Stahlblech mit einer organischen Überzugsschicht.

8. Warmprägeverfahren, **dadurch gekennzeichnet, dass** die folgenden Verfahrensschritte umfasst sind:
(a) Austenitisierung des Stahlmaterials: Bereitstellen eines Stahlmaterials, das 0,27 bis 0,40 Gew.-% C; 0,2 bis 3,0 Gew.-% Mn; 0,11 bis 0,4 Gew.-% V; 0 bis 0,8 Gew.-% Si; 0 bis 0,5 Gew.-% Al; 0 bis 2 Gew.-% Cr; 0 bis 0,15 Gew.-% Ti; 0 bis 0,15 Gew.-% Nb, 0 bis 0,004 Gew.-% B; einen Anteil von Mo, Ni, Cu, der insgesamt in Kombination weniger als 2 Gew.-% beträgt, und unvermeidliche Verunreinigungselemente, wobei der Rest aus Fe besteht,
Erhitzen auf 800 bis 920 °C und Halten der Temperatur für 1 bis 10.000 s;
(b) Überführen des Stahlmaterials: Überführen des oben erhitzten Stahlmaterials zu einer Matrize zum Warmprägen, wobei sichergestellt wird, dass das Stahlmaterial eine Temperatur von über 550 °C hat, wenn es zu der Matrize überführt ist;
(c) Warmprägen: Einstellen einer angemessenen Presskraft entsprechend der Stahlzuschnittsgröße des oben erwähnten Materials, um einen Prägedruck von 1 bis 40 MPa zu erreichen, Bestimmen einer Verweilzeit entsprechend einer Dicke des Blechs, die auf 4 bis 40 s geregelt wird und Regelung einer Matrizenoberflächentemperatur unter 200 °C durch ein Kühlsystem der Matrize, so dass das Stahlmaterial in der Matrize schnell auf unter 250 °C mit einer durchschnittlichen Kühlrate von nicht weniger als 10 °C/s abgekühlt wird.

9. Warmprägeverfahren nach Anspruch 8, **dadurch gekennzeichnet, dass** ein Wärmeverfahren in dem Verfahrensschritt (a) mindestens eines von einem Rollenherdofen, einem Kammerofen, einer Induktionserwärmung und einer Widerstandserwärmung umfasst.

10. Anlassverfahren, **dadurch gekennzeichnet, dass** es die folgenden Schritte umfasst:
(a) Bereitstellen von warmgeprägtem Stahlmaterial nach Anspruch 1;
(b) Erwärmen des warmgeprägten Stahlmaterials auf 150 bis 200 °C und Aufrechterhalten der Temperatur für 10 bis 40 Minuten durch das Einbrennverfahren während der Karosserie-Montage; oder Erwärmen des geformten Bauteils auf 150 bis 280 °C bei einer Erwärmungsrate von 0,001 bis 100 °C/s und Aufrechterhalten der Temperatur für 0,5 bis 120 Minuten und anschließend das Abkühlen in einer beliebigen Weise.

11. Verwendung eines Bauteils aus einem warmgeprägten Stahlmaterial nach einem der Ansprüche 1 bis 3 oder aus einem angelassenen, warmgeprägten Material nach Anspruch 4 für hochfeste Automobilbauteile, einschließlich einer A-Säule, einer B-Säule, eines Stoßfängers, eines Dachrahmens, eines Unterbodenrahmens und eines Türstoßfängers, eines Automobils.

## Revendications

1. Acier estampé à chaud, **caractérisé en ce que**, l'acier estampé à chaud comprend les composants suivants en poids :
De 0,27 à 0,40 % de C ;
De 0,2 à 3,0 % de Mn ;
De 0,11 à 0,4 % de V ;
De 0 à 0,8 % de Si ;
De 0 à 0,5 % d'Al ;
De 0 à 2 % de Cr ;
De 0 à 0,15 % de Ti ;
De 0 à 0,15 % de Nb ;
De 0 à 0,004 % de B ;
La teneur en Mo, Ni, Cu en combinaison représente un total de moins de 2% ; et
des impuretés inévitables,
dans lequel le reste est constitué de Fe,
l'acier estampé à chaud présentant une limite d'élasticité de 1300 MPa à 1700 MPa, une résistance à la traction de 1800 à 2200 MPa et un allongement de 6 à 9 % sans revenu.

2. Acier estampé à chaud selon la revendication 1, **caractérisé en ce que**, l'acier estampé à chaud présente un carbure composite de VC et/ou de (V, Ti)C, de (V, Nb)C ou de (V, Nb, Ti)C aux joints de grains d'austénite durant un processus d'austénitisation à une température de 800 à 920 °C au cours d'un processus d'estampage à chaud.

3. Acier estampé à chaud selon l'une quelconque des revendications 1 à 2, **caractérisé en ce que**, une fraction de volume du carbure de VC et/ou du carbure composite de V avec Ti, Nb dans l'acier estampé à chaud est supérieure à 0,1 %.

4. Acier estampé à chaud et revenu comprenant l'acier estampé à chaud selon l'une quelconque des revendications 1 à 3, **caractérisé en ce que**, l'acier estampé à chaud et revenu présente une limite d'élasticité de 1350 à 1800 MPa, une résistance à la traction de 1700 à 2150 MPa, et un allongement de 7 à 10 %.

5. Acier estampé à chaud selon l'une quelconque des revendications 1 à 2, **caractérisé en ce que** l'acier estampé à chaud est fabriqué à partir d'une tôle d'acier qui comprend une tôle d'acier laminée à chaud, une tôle d'acier décapée et laminée à chaud, une tôle d'acier laminée à froid, ou une tôle d'acier dotée d'une couche de revêtement.

6. Acier estampé à chaud selon la revendication 5, **caractérisé en ce que**, la tôle d'acier dotée d'une couche de revêtement est une tôle d'acier zinguée qui est une tôle d'acier laminée à chaud ou une tôle d'acier laminée à froid sur laquelle une couche de zinc métallique est formée, dans laquelle la tôle d'acier zinguée comprend au moins l'un des procédés choisis parmi la galvanisation à chaud, le recuit par galvanisation, le zingage ou le procédé de placage d'un mélange zinc-fer.

7. Acier estampé à chaud selon la revendication 5, **caractérisé en ce que**, la tôle d'acier dotée d'une couche de revêtement est une tôle d'acier laminée à chaud ou une tôle d'acier laminée à froid sur laquelle une couche d'aluminium-silicium est formée, ou une tôle d'acier dotée d'une couche de revêtement organique.

8. Procédé d'estampage à chaud, **caractérisé en ce qu'**il comprend les opérations suivantes :
(a) austénitisation de l'acier : fournir un acier comprenant de 0,27 à 0,40 % en poids de C ; de 0,2 à 3,0 % en poids de Mn ; de 0,11 à 0,4 % en poids de V ; de 0 à 0,8 % en poids de Si ; de 0 à 0,5 % en poids d'Al ; de 0 à 2 % en poids de Cr ; de 0 à 0,15 % en poids de Ti ; de 0 à 0,15 % en poids de Nb ; de 0 à 0,004 % en poids de B ; la teneur en Mo, Ni, Cu en combinaison représente un total de moins de 2 % en poids ; et d'inévitables impuretés, dans lequel le reste est constitué de Fe,
chauffer cet acier à une température comprise entre 800 et 920 °C et maintenir la température pendant 1 à 10000 s ;
(b) transfert de l'acier : transférer l'acier chauffé ci-dessus dans un moule destiné à l'estampage à chaud, en veillant à ce que l'acier ait une température supérieure à 550 °C lorsqu'il est transféré dans le moule ;
(c) estampage à chaud : paramétrer un tonnage de presse raisonnable en fonction de la taille de l'ébauche en acier du matériau susmentionné afin d'obtenir une pression d'estampage de 1 à 40 MPa, déterminer une durée de temporisation en fonction de l'épaisseur de la tôle, qui est réglée entre 4 et 40 s, et s'assurer que la température de surface du moule soit inférieure à 200 °C à l'aide d'un système de refroidissement du moule, de façon à ce que l'acier dans le moule soit rapidement refroidi à une température inférieure à 250 °C à une vitesse de refroidissement moyenne d'au moins 10 °C/s.

9. Procédé d'estampage à chaud selon la revendication 8, **caractérisé en ce que**, le procédé de chauffage dans l'opération (a) comprend au moins l'un parmi un four à rouleaux, un four à chambre, un dispositif de chauffage par induction et un dispositif de chauffage par résistance.

10. Procédé de traitement de revenu, **caractérisé en ce qu'**il comprend les étapes suivantes :
(a) fournir un acier estampé à chaud selon la revendication 1 ;
(b) chauffer l'acier estampé à chaud à 150°C jusqu'à 200°C et maintenir la température pendant 10 à 40 minutes par le procédé de cuisson au cours de l'assemblage de la carrosserie ; ou chauffer le composant formé à 150°C jusqu'à 280°C à une vitesse de chauffage de 0,001 à 100°C/s et maintenir la température pendant 0,5 à 120 minutes, puis le refroidir de quelque façon que ce soit.

11. Utilisation d'un composant en acier estampé à chaud selon l'une quelconque des revendications 1 à 3 ou en acier estampé à chaud et revenu selon la revendication 4 pour des éléments à haute résistance pour automobiles comprenant un pilier A, un pilier B, un pare-choc, un cadre de toit, un cadre de soubassement et une barre de protection de portière d'une automobile.
